(19) **Europäisches Patentamt**

**European Patent Office**

**Office européen des brevets**

(11) **EP 0 819 735 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.$^7$: **C08L 83/04**, C08J 3/03, C09D 183/04

(21) Anmeldenummer: **97110937.6**

(22) Anmeldetag: **02.07.1997**

(54) **Wässrige Polysiloxanemulsionen,ein Verfahren zur Herstellung und deren Verwendung**

Aqueous polysiloxane emulsions, process for their preparation and their use

Emulsions aqueuses de polysiloxane, leur procédé de préparation et leur utilisation

(84) Benannte Vertragsstaaten:
**DE FI FR GB IT NL SE**

(30) Priorität: **15.07.1996 DE 19628447**

(43) Veröffentlichungstag der Anmeldung:
**21.01.1998 Patentblatt 1998/04**

(73) Patentinhaber: **GE Bayer Silicones GmbH & Co. KG**
**40699 Erkrath (DE)**

(72) Erfinder:
• **Grape, Wolfgang, Dr.**
  **51061 Köln (DE)**
• **Stracke, Rudi**
  **51069 Köln (DE)**
• **Zillmer, Frank**
  **51379 Leverkusen (DE)**
• **de Montigny, Armand, Dr.**
  **51373 Leverkusen (DE)**

(56) Entgegenhaltungen:
**EP-A- 0 384 597      EP-A- 0 587 462**
**EP-A- 0 627 474      US-A- 3 900 617**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft wäßrige Emulsionen, ein Verfahren zur Herstellung und deren Verwendung.

Durch Hydrosilylierungsreaktionen vernetzende Organopolysiloxanzubereitungen werden als Emulsionen seit langem für z. B. Trennbeschichtungen von flexiblen Materialien eingesetzt (US-A 3,527,659 und EP-A-0 587 462). Im allgemeinen bestehen solche vernetzenden Systeme aus:

- mindestens einem Organopolysiloxan mit mindestens zwei ungesättigten Kohlenwasserstoffgruppen im Molekül,
- mindestens einem Organohydrogenpolysiloxan mit mindestens drei SiH-Gruppierungen im Molekül und
- einer für eine katalytische Wirkung ausreichenden Menge einer Metallverbindung aus der Platingruppe.

Zur Herstellung von Trennbeschichtungen werden desweiteren Zweikomponenten-Emulsionssysteme eingesetzt, die laut US-A 3,900,617 aus einer 40 %igen Emulsion von einem Dimethylpolysiloxanpolymer mit Dimethylvinylsiloxyendgruppen, einem Pt-Katalysator, Emulgatoren in Wasser und einer 40%ige Emulsion eines Methylhydrogenpolysiloxans bestehen.

Diese Emulsionssysteme weisen jedoch noch eine unbefriedigende Trennleistung auf.

Das bei vielen Emulsionen bestehende Problem der Lagerstabilität wurde in EP-A-0587462 dadurch gelöst, daß der pH-Wert der Emulsion mit Hilfe einer organischen oder anorganischen Säure auf 3 bis 5 eingestellt wird. Jedoch ist es auch hier noch notwendig, zur Sicherstellung der Aushärtereaktion den Pt-Katalysator erst direkt vor Gebrauch der Emulsion dem Gemisch der übrigen Komponenten zuzufügen.

Bei der Herstellung von Trennbeschichtungen ist es jedoch nach wie vor schwierig die geeigneten Topfzeiten, d.h. die Verweilzeiten der zu beschichtenden Substrate in dem die Siliconbeschichtung enthaltenden Bad, einzustellen und eine schnelle Aushärtung im Trockenofen zu gewährleisten. Bei den bislang bekannten Emulsionen für die Trennbeschichtung bilden sich im Ofen selber häufig Gelteilchen, d.h.ausgehärtete Siliconteilchen. Dieses Dusting genannte Phänomen verringert die Ausbeute an auf das Substrat aufgebrachten Silicons und erfordert von Zeit zu Zeit einen immensen Reinigungsaufwand im Bereich des Trockenofens und seiner Umgebung. Ein weiterer Nachteil der im Stand der Technik bekannten Emulsionen besteht in einer starken Schaumbildung, die sich bei der Verarbeitung störend bemerkbar macht.

Aufgabe der vorliegenden Erfindung war daher die Bereitstellung von wäßrigen Emulsionen, die sich zur Herstellung einer abhäsiven Ausrüstung von flexiblen Substraten, insbesondere als Trennmittelbeschichtung, eignen und die die im Stand der Technik bekannten Nachteile nicht aufweisen.

Überraschenderweise wurde nun gefunden, daß wäßrige Emulsionen, die additionsvernetzende Polydiorganosiloxane sowie geringe Mengen an unreaktivem Organopolysiloxan neben den bekannten Inhaltstoffen aufweisen, einfach herstellbar und lagerstabil sind, in denen das Dusting bei qualitativ hochwertigen Beschichtungen weitestgehend vermieden und in denen die Schaumbildung zudem weitestgehend unterdrückt werden kann.

Gegenstand der Erfindung sind daher wäßrige Emulsionen, bestehend im wesentlichen aus:

- mindestens einem mindestens 2 ungesättigte Kohlenwasserstoffgruppen aufweisenden Organopolysiloxan A),

- mindestens einem Methylhydrogenpolysiloxan B),

- mindestens einem linearen Trimethylsiloxy gruppen-endgestopptem Polydimethylsiloxan C),

- mindestens einem Katalysator D) aus der Platingruppe,

- mindestens einem Inhibitor E),

- gegebenenfalls Emulgatoren und / oder Verdickern F) und

- gegebenenfalls Zusatz - und/ oder Hilfsstoffen G).

Das mindestens 2 ungesättigte Kohlenwasserstoffgruppen aufweisende Organopolysiloxan A) im Sinne der Erfindung ist vorzugsweise ein cyclisches, lineares oder verzweigtes Polysiloxan, das Einheiten der allgemeinen Formel

$$(R)_a(R^1)_b SiO_{(4-a-b)/2} \qquad (I)$$

aufweist,

mit R = $C_2$-$C_8$-Alkenyl und/oder ungesättigte $C_3$-$C_{10}$-Etherreste, wie z. B. Vinyl, Allyl, 1-Butenyl, 1-Hexenyl und/oder - $CH_2$-$CH_2CH_2OCH_2CH = CH_2$. etc,

$R^1$ = einwertige, gesättigte gegebenenfalls substituierte Kohlenwasserstoff reste mit bis zu 10 Kohlenstoffatomen aus der Gruppe der substituierten und unsubstituierten Alkyl-, Aryl-, und Arylalkylreste, wobei a und b ganze Zahlen in folgenden Grenzen sind: $0 \leq a \leq 3$ bzw. $0 \leq b \leq 3$ und $0 \leq a + b \leq 4$ und jedes einzelne R bzw. $R^1$ innerhalb der Moleküls gleich oder ungleich sein kann.

Bevorzugt ist R = Vinyl- oder Allyl, besonders bevorzugt Vinyl.

Beispiele für $R^1$ sind Methyl, Ethyl, Propyl, Isopropyl, Butyl, Octyl, u.s.w., Cyclobutyl, Cyclopentyl, Cyclohexyl, u.s.w., Phenyl, Tolyl, Xylyl, Naphtyl, u.s.w. Benzyl, Phenylethyl, Phenylpropyl. In einer Ausführungsform der Erfindung sind einige oder alle der Wasserstoffatome Alkyl-, Aryl-, und Arylalkylradikale $R^1$ durch Fluor- und/oder Chlor-, Brom-, bzw. Iodatome und/oder Cyanoradikale substituiert. In diesem Fall entspricht $R^1$ beispielsweise Chlormethyl-, Trifluoropropyl-, Chlorophenyl-, Dibromophenyl-, β-Cyanoethyl, β-Cyanopropyl oder γ-Cyanopropylresten. Bevorzugt sind jedoch mindestens 90 % der Reste $R^1$ Methyl.

In einer bevorzugten Ausführungsform der Erfindung ist a gleich 0 oder 1.

Mit der dem Fachmann geläufigen Nomenklatur mit

M=     $(CH_3)_3SiO_{1/2}$,

D=     $(CH_3)_2SiO_{2/2}$,

T=     $(CH_3)SiO_{3/2}$, Q = $SiO_{4/2}$,

$M^{Vi}$=     $(CH_2=CH)(CH_3)_2SiO_{1/2}$ und

$D^{Vi}$=     $(CH_2=CH)(CH_3)SiO_{2/2}$ lassen sich folgende Beispiele für die Komponente A) angeben:

$M_2D_{100}D^{Vi}_3$, $M^{Vi}_2 D_{180}$, $M^{Vi} MD_{100}D^{Vi}_3$, $T_5D_{550}M^{Vi}_7$, $T_3D_{500}M^{Vi}_2M_3$ und/oder $T_6D_{300}D^{Vi} M_4 M^{Vi}_4$.

Der molare Anteil an ungesättigten Resten des Typs R kann beliebig gewählt werden.

In der Komponente A) sollte bevorzugt der molare Anteil an ungesättigten Resten des Typs R 0,01 und 10 mmol pro Gramm, besonders bevorzugt zwischen 0,05 und 1 mmol pro Gramm und ganz besonders bevorzugt 0,1 bis 0,7 mmol pro Gramm der Komponente A) betragen. Vorzugsweise sind daher 0,05-10 %, besonders bevorzugt 0,3 - 6 %, ganz besonders bevorzugt 0,6 - 2 % der Reste R ungesättigt. Die Viskosität der Komponente A) beträgt vorzugsweise zwischen 10 und 100000 mPas, besonders bevorzugt 50-10 000 mPas, bei 25°C.

In einer bevorzugten Ausführungsform der Erfindung werden als Komponente A) die in DE-A 43 28 657 beschriebenen Organopolysiloxane eingesetzt, da diese verzweigt sind, dort das Verhältnis der Anzahl der Diorganosiloxyeinheiten (D-Einheiten) zur Anzahl der Verzweigungsstellen durchschnittlich 15 und 40 beträgt, dort mindestens eine Triorganosiloxyeinheit (M-Einheit) und maximal die Hälfte aller M-Einheiten von ungesättigten Resten frei sind, die restlichen M-Einheiten nur je einen ungesättigten Rest tragen, und der Gehalt an ungesättigten Resten 0,1 bis 1 mmol/g (0,2 - 6 %) beträgt.

Die Verzweigungsstellen der Komponente A) sind vorzugsweise Monoorganosiloxyeinheiten, d. h., trifunktionelle Siloxyeinheiten (T-Einheiten), die jedoch teilweise auch durch tetrafunktionelle Siloxyeinheiten ($SiO_{4/2}$-Einheiten, Q-Einheiten) ersetzt sein können.

Die von ungesättigten Resten freien Endgruppen des verzweigten Organopolysiloxans erfüllen die Funktion eines internen Weichmachers. Über die Anzahl der von ungesättigten Resten freien Endgruppen (M-Einheiten) kann die Flexibilität des vernetzten Films gesteuert werden.

Beispiele für die bevorzugte Komponente A) sind Verbindungen der Formeln

$$T_5D_{200}M^{Vi}_5M_2, \quad T_7D_{280}M^{Vi}_5M_4,$$

$$T_6D_{180}D^{Vi}_2M^{V1}_4M_4 \text{ und/ oder } T_8D_{250}M^{Vi}_7M_3.$$

Verzweigte, mindestens 2 ungesättigte Kohlenwasserstoffgruppen aufweisende Organopolysiloxane A) können nach üblichen Verfahren hergestellt werden, wie z. B. durch Hydrolyse von Chlorsilanen und anschließender Polymerisation mit niedermolekularen cyclischen Diorganopolysiloxanen.

Das Methylhydrogenpolysiloxan B) enthält vorzugsweise Einheiten der allgemeinen Formel

$$H_c(R^2)_d SiO_{(4-c-d)/2} \qquad (II)$$

mit $R^2$ = einwertige, gesättigte gegebenenfalls substituierte Kohlenwasserstoffreste mit bis zu 10 Kohlenstoffatomen aus der Gruppe der substituierten und unsubstituierten Alkyl-, Aryl-, Arylalkyl- und / oder $C_2$-$C_8$-Alkenylreste, wobei

c und d ganze Zahlen sind mit $0 \leq d \leq 3$ und $0 \leq c \leq 2$ sowie $0 \leq c + d \leq 4$, bevorzugt $0 \leq c \leq 1$.

Die Methylhydrogenpolysiloxane B) sind vorzugsweise linear. Mindestens die Hälfte der D-Einheiten weisen vorzugsweise direkt an Silicium gebundene Wasserstoffatome ($H(CH_3)SiO$-Gruppen) auf. Vorzugsweise beträgt die Anzahl der direkt an Silicium gebundenen Wasserstoffatome aufweisenden Gruppen zwischen 70 und 85 % der difunktionellen Einheiten.

Der molare Anteil von direkt an ein Siliciumatom gebundenen Wasserstoffatomen in der Komponente B) kann - im Rahmen der o. g. strukturellen Einschränkungen - beliebig gewählt werden.

In der Komponente B) liegt vorzugsweise der molare Anteil von direkt an ein Siliciumatom gebundenen Wasserstoffatomen zwischen 0,01 und 17 mmol, besonders bevorzugt zwischen 0,1 und 17 mmol und ganz besonders bevorzugt zwischen 1 und 17 mmol pro Gramm der Komponente B). Das bedeutet, daß vorzugsweise zwischen 3 und 50 %, besonders bevorzugt 30 bis 50 % der Reste R = H sind.

Beispiele für die Komponente B) sind Verbindungen der Formeln

$$M^H_2 D_{10}, \quad M_2\, D_{10} D^H_{10}, \quad M^H_2 D^H_{20} D_{10},$$

$$M^{Vi}_2 D^H_{11} \text{ und /oder } M_2 D^{Vi}_3 D^H_8 \text{ mit}$$

$$M^H = H(CH_3)_2 SiO_{1/2}$$

und

$$D^H = H(CH_3)SiO_{2/2}.$$

Vorzugsweise liegen die Komponenten A) und B) in einem solchen Mengenverhältnis vor, daß das molare Verhältnis von direkt an ein Siliciumatom gebundenen Wasserstoffatomen (SiH) in der Komponente B) zu den ungesättigten Resten (Si-Vinyl) in der Komponente A) zwischen 0,05 und 20, besonders bevorzugt zwischen 0,5 und 10 und ganz besonders bevorzugt zwischen 1 und 3, beträgt.

Komponente C) ist ein lineares, mit Trimethylsiloxygruppen-endgestopptes Polydimethylsiloxan, wie es beispielsweise von der Bayer AG unter der Bezeichnung Baysilone-Öle M vertrieben wird. Besonders bevorzugt ist der Einsatz von solchen Baysilone-Ölen M mit einer Viskosität zwischen 50 $mm^2s^{-1}$ und 5000 $mm^2s^{-1}$.

Der Katalysator aus der Platingruppe D) enthält vorzugsweise die Elemente Platin, Rhodium, Iridium, Nickel, Ruthenium und/oder Palladium, elementar, auf einer Trägersubstanz oder in Form ihrer Verbindungen. Bevorzugt sind Platinverbindungen oder Platinkomplexe, wie zum Beispiel $H_2PtCl_6$, Platin-Olefinkomplexe, Platin-Alkoholkomplexe, Platin-Vinylsiloxankomplexe oder auch elementares Platin auf einer Trägersubstanz, wie z. B. Aktivkohle, $Al_2O_3$ oder $SiO_2$. Besonders bevorzugt ist Komponente D) ein Platin-Vinylsiloxankomplex. Diese Platin-Vinylsiloxankomplexe verfügen dann vorzugsweise im Siloxan über mindestens 2 olefinisch ungesättigte Doppelbindungen. Diese sind z. B. in US-A 3 715 334 beschrieben.

Unter den Begriff Siloxan fallen hierbei Polysiloxane, d. h. zum Beispiel auch Vinylpolysiloxane.

Der Anteil der Komponente D), bezogen auf die Summe aller Bestandteile, beträgt vorzugsweise zwischen 1 und 1000 ppm, besonders bevorzugt zwischen 1 und 500 ppm und ganz besonders bevorzugt zwischen 25 und 250 ppm.

Der Katalysator aus der Platingruppe D) kann beispielsweise auch in einem Teil des Polymeren A) vorgelöst sein.

Der Begriff Inhibitor E) im Sinne der Erfindung umfaßt alle nach dem Stand der Technik bekannten Inhibitoren, wie z. B. Maleinsäure und ihre Derivate, Amine, Alkylisocyanurate und acetylenisch ungesättigte Alkohole, in denen die OH-Gruppe an ein der C-C-Dreifachbindung benachbartes Kohlenstoffatom gebunden ist, wie sie z. B. in US-A 3 445 420 näher beschrieben sind. Vorzugsweise ist Komponente E) 2-Methyl-3-butin-2-ol, 1-Ethinylcyclohexanol und/ oder ($\pm$) 3-Phenyl-1-butin-3-ol. Die Menge an Komponente E) in der Mischung beträgt vorzugsweise 0,0001 % bis 5 %, , besonders bevorzugt 0,01 % bis 2 % und ganz besonders bevorzugt 0,1 bis 1 %, bezogen auf das Gesamtgewicht der Mischung. Komponente F) umfaßt prinzipiell alle zur Bildung und Stabilisierung von Emulsionen geeigneten Emulgatoren und/oder Verdicker (vgl. z.B. Mc Cutcheon's Detergents & Emulsiliers, International Edition).

Für den Fall, daß die erfindungsgemäßen Emulsionen zur Herstellung von Trennbeschichtungen in Lebensmittelbereich eingesetzt werden, sind solche Emulgatoren bevorzugt, die in den FDA Regulations 176.170 "Components of Paper and Paperboard" genannt sind. Besonders bevorzugt sind Emulgatoren und Verdicker, die in der Empfehlung XV des Bundesgesundheitsamtes (BGA) Erwähnung finden.

Beispiele für geeignete Emulgatoren und Verdicker F) sind:

$C_8$-$C_{22}$-Alkyldimethylbenzylammoniumchlorid, vorzugsweise höchstens 1,5 %, Natriumlaurylsulfat, vorzugsweise höchstens 0,5 %, Polyethylenglykolether von einwertigen aliphatischen Alkoholen $C_{12}$-$C_{20}$- und $C_2$-$C_9$-Alkylphenolen, Polyethylenglykolester natürlicher Fettsäuren $C_8$-$C_{22}$ und vegetabilischer Öle, und/oder teilacetylierter Polyvinylalkohol mit weniger als 20 % Acetylgruppen und einem K-Wert von über 40. Die Menge an Emulgatoren und Verdicker F) sollte vorzugsweise 10 %, bezogen auf die Komponenten A), B) und C), nicht überschreiten.

Unter die BGA-Empfehlung XV fallende Emulgatoren sind zudem:
Carboxymethylcellulose, aufgeschlossene Stärke, Alginate, Kasein, Hartparaffinund Wachsdispersionen, Dispersionen auf Basis von Mischpolymerisaten aus Acrylsäure- und Methacrylsäureestern, Butadien und Styrol, soweit sie der Empfehlung XIV entsprechen und/oder Polyvinylalkohol (Viskosität der 4 %igen wäßrigen Lösung bei 20 °C mindestens 4 cP), gemäß Empfehlung XIV).

Bevorzugt ist insbesondere Polyvinylalkohol in Kombination mit Natriumlaurylsulfat oder Alkyldimethylbenzylammoniumchlorid.

Zusatz- und Hilfsstoffe G) im Sinne der Erfindung sind z. B. Polysiloxanharze, die aus Bausteinen der allgemeinen Formeln (I) und (II) aufgebaut sind, Füllstoffe, wie z.B. Diatomeenerden, feinteilige Quarzmehle, amorphe Kieselsäuren, pyrogene und/ oder gefällte Kieselsäuren mit einer BET- Oberfläche von 50 bis 500 $m^2$/g. Derartige Füllstoffe können oberflächenmodifiziert sein, z. B. mit siliziumorganischen Verbindungen. Die Modifizierung kann auch während der Einarbeitung in das Polymer durch Zusatz von z. B. Hexamethyldisilazan oder 1,3-Divinyl-1, 1, 3, 3-tetramethyldisilazan unter Zusatz von Wasser erreicht werden.

Zusatz- und Hilfsstoffe G) im Sinne der Erfindung sind ebenfalls Verlaufsmittel, die die Benetzung des Substrates mit der Emulsion verbessern helfen. Hierfür eignen sich zum Beispiel Polyethersiloxane ("Silicontenside und/ oder Fluortenside"). Ebenfalls sind keimhemmende Mittel (z. B. Formaldehyd-abspaltende Produkte) zu den Zusatz- und Hilfsmittel G) zu rechnen.

Komponente G) bzw. die Summe aus den Komponenten G) beträgt vorzugsweise unter 5 Gew. - %, bezogen auf die Gesamtmischung.

Für die wäßrige Emulsion ist demineralisiertes oder deionisiertes Wasser bevorzugt.

Vorzugsweise weisen die erfindungsgemäßen wäßrigen Emulsionen folgenden Bestandteile auf:

- als Komponente A): $T_8 D_{250} M^{Vi}_7 M_3$
- als Methylhydrogenpolysiloxan B): $M_2 D^H_{30} D_{10}$
- als Komponente C): Polydimethylsiloxan der Viskosität 1 000 $mm^2$/s
- als Katalysator D): Pt-Vinylsiloxan-Komplex
- als Inhibitor E): Ethinylcyclohexanol
- als Emulgator und/oder Verdicker F): Polyvinylalkohol gegebenenfalls in Kombination mit Natriumlaurylsulfat
- als Zusatz- und/oder Hilfsstoffe G): keimhemmende Mittel und/oder Polyethersiloxan

Gegenstand der Erfindung ist zudem ein Verfahren zur Herstellung der erfindunggemäßen Emulsionen, wonach Katalysator D) sowie gegebenenfalls Organopolysiloxan A) und/oder Organopolysiloxan C) in Wasser emulgiert werden und separat eine Emulsion aus Organopolysiloxan A), Methylhydrogenpolysiloxan B), Organopolysiloxan C), Inhibitor E), Emulgatoren und/oder Verdicker F) in Wasser hergestellt wird und anschließend beide Emulsionen zusammengerührt werden.

Zusätzliche Komponenten G) können den Komponenten A), B) und/oder C) vor der Emulgierung, oder einer der beiden Emulsionen im Anschluß an die Emulgierung zugefügt werden.

Geeignete Aggregate zum Erreichen einer für die Stabilität oder Emulsion ausreichenden Teilchengröße sind z.B. Hochdruckhomogenisatoren, Kolloidmühlen o. ä.

Berücksichtigt man bei Herstellung der Emulsionen das vorgesehene molare Verhältnis SiH : SiVinyl, so lassen sich beide Emulsionen auf einen Silicongehalt von 40 % in einer Weise einstellen, daß sie vor Anwendung im Mengenverhältnis 1: 1 untereinander gemischt werden müssen. Es ist aber auch möglich, eine Emulsion herzustellen, die nur den Katalysator D), Emulgatoren und/oder Verdicker F) und Wasser enthält, und die einer zweiten Emulsion aus Organopolysiloxan A), Methylhydrogensiloxan B), Komponente C), Inhibitor E), Emulgatoren und/oder Verdicker F) und Wasser in einer Menge zugemischt wird, die ausreicht, um den gewünschten katalytischen Effekt zu bewirken.

Gegenstand der Erfindung ist zudem die Verwendung der erfindungsgemäßen Emulsionen zur Herstellung einer abhäsiven Ausrüstung von flexiblen Substraten.

Hierfür eignen sich Walzen- oder Rakelauftragswerke mit daran anschließendem Trockenofen.

Die nachfolgenden Beispiele dienen der Erläuterung der Erfindung, ohne dabei limitierend zu wirken.

**Ausführungsbeispiele:**

**Beispiel 1**

Herstellung einer wäßrigen 40 %igen Siliconemulsion aus Komponenten A), B), C), E), F) und G).

| Komponente | Beschreibung | Menge in Gew. % |
|---|---|---|
| | | |
| A) | $T_8 D_{250} M^{Vi}_7 M_3$ | 36,0 |
| | | |
| B) | $M_2 D^H_{30} D_{10}$ | 2,9 |
| | | |
| C) | Polydimethylsiloxan der Viskosität 1000 $mm^2$/s (Baysilone-Öl M 1000) | 1,0 |
| | | |
| E) | Ethinylcyclohexanol | 0,1 |
| | | |
| F) | Polyvinylalkohol Mowiol 4-88 | 3,0 |
| | Natriumlaurylsulfat | 0,1 |
| | | |
| G) | keimhemmendes Mittel Preventol D2 der Bayer AG | 0,1 |
| | | |
| | Wasser | 56,8 |

Emulsionsherstellung:

Komponenten F) wurden in 40 °C warmem destilliertem Wasser gelöst. Komponenten A), B), C), E) und G) wurden in einem getrennten Ansatzkessel zusammengerührt und anschließend als Mischung mittels eines schnelllaufenden Rührers in die Lösung der Komponente F) eingerührt. Die so erhaltene Voremulsion wurde in 5 Durchgängen bei 200 bar Druck in einem Hochdruckhomogenisator homogenisiert.

**Beispiel 2**

Herstellung einer wäßrigen 40 % Siliconemulsion aus Komponenten A), C), D), F) und G)

| Komponente | Beschreibung | Menge in Gew. % |
|---|---|---|
| | | |
| A) | wie in Beispiel 1 | 32,7 |
| | | |

(fortgesetzt)

| Komponente | Beschreibung | Menge in Gew. % |
|---|---|---|
| C) | wie in Beispiel 1 | 1,0 |
| | | |
| D) | Pt-Vinylsiloxan-Komplex gelöst in Polymer A mit 1320 ppm Platin | 6,3 |
| | | |
| F) | wie in Beispiel 1 | 3,0 + 0,1 |
| | | |
| G) | wie in Beipiel 1 | 0,1 |
| | | |
| | Wasser | 56,8 |

Die Emulsionsherstellung erfolgte wie in Beispiel 1, nur mit den oben genannten Komponenten.

**Beispiel 3**

Durchführung der Beschichtung von Backpapieren

Die Emulsionskomponenten aus Beispielen 1 und 2 wurden im Verhältnis 1 : 1 gemischt und mit Wasser auf ca. 10 Gew.-% Wirkstoff verdünnt. Dieses verdünnte Emulsionsgemisch wurde auf das zu beschichtende Papier aufgetragen und mit einem 10 mm Metallrakel abgezogen. Auf der anderen Papierseite wurde in gleicher Weise verfahren. Die anschließende Trocknung erfolgte im Heizschrank bei 160 °C und 15 sec. Verweilzeit. Bei den so ausgerüsteten Papieren wurde dann das Siliconauftragsgewicht mittels Röntgenfluoreszenzanalyse gemessen. Das Auftragsgewicht lag bei oben genannten Verdünnung in einem Bereich von 0,4 g - 0,6 g Silicon/m$^2$.

**Beispiel 4**

Durchführung des Backtests

| Rezeptur: | 4 Eier |
|---|---|
| | 1,5 dl Weizenmehl |
| | 1 dl Kartoffelmehl |
| | 1 dl Zucker |
| | 1 Teelöffel Backpulver |

Alle Zutaten wurden bei Raumtemperatur verarbeitet. Eier und Zucker wurden mit einer Universalküchenmaschine auf höchster Schnelligkeitsstufe in 5 min. schaumig schlagen, Weizenmehl, Kartoffelmehl und Backpulver miteinander vermischt. Die Mehlmischung wurde durch ein Sieb zum Eier-Zucker-Schaum zugeben, und mit einem Löffel verrührt. Vor der Teigzubereitung wurden die beschichteten Papiere zu Formen gefaltet, deren Böden die Maße 15 x 20 cm hatten. Vier dieser gefalteten Formen wurden auf ein Backblech gelegt. Die Teigmenge wurde nun gleichmäßig auf die vier Formen verteilt. Der Teig wurde 8 min. bei 225 °C im Umluftofen gebacken. Das fertige Gebäck wurde gestürzt und 2 min. bei RT abgekühlt. Danach wurde das zu testende beschichtete Papier von dem Gebäck abgezogen.
Beurteilung: Beurteilt wurde die anhaftende Menge Gebäck am Papier, umgerechnet auf g/m$^2$. Bei Vorgehensweise gemäß Beispiel 3 wurden 20 g anhaftendes Gebäck /m$^2$ gefunden.

**Beispiel 5**

Herstellung einer wäßrigen 40%igen Siliconemulsion aus den Komponenten A), B), C), E), F) und G).

| Komponente | Beschreibung | Menge in Gew. % |
|---|---|---|
| | | |
| A) | wie in Beispiel 1 | 37,6 |
| B) | wie in Beispiel 1 | 1,0 |
| C) | wie in Beispiel 1 | 1,0 |
| E) | wie in Beispiel 1 | 0,1 |
| F) | Polyvinylalkohol Mowiol 4-88 | 3,0 |
| | Natriumlaurylsulfat | 0,1 |
| G) | Polyethersiloxan als Verlaufsmittel (Baysilone-Lackadditiv VP AI 3468 der Bayer AG) | 0,3 |
| | Preventol D 2 | 0,1 |
| | Wasser | 56,8 |

**Beispiel 6**

Herstellung einer 50%igen Katalysatoremulsion aus den Komponenten C), D), F) und G).

| Komponente | Beschreibung | Menge in Gew. % |
|---|---|---|
| C) | wie in Beispiel 1 | 1,0 |
| D) | Pt-Vinylsiloxan-Komplex gelöst in Polymer A mit 3400 ppm Platin | 49,0 |
| F) | Mowiol 4-88 | 3,0 |
| | Natriumlaurylsulfat | 0,1 |
| G) | Preventol D 2 | 0,1 |
| | Wasser | 46,8 |

**Beispiel 7**

Durchführung des Emulsionsauftrages im Labor

100 g der Emulsion aus Beispiel 5 und 3 g der Emulsion aus Beispiel 6 wurden auf 10 % Wirkstoff verdünnt; es wurde weiter vorgegangen wie in Beispiel 3.

**Beispiel 8**

Durchführung des Backtests

Bei analoger Vorgehensweise wie im Beispiel 4 wurden 18 g Gebäckrückstand /m$^2$ gefunden.

**Beispiel 9** (nicht erfindungsgemäß)

Herstellung einer 40%igen Siliconemulsion analog Beispiel 1 ohne Komponente C).

**Beispiel 10** (nicht erfindungsgemäß)

Herstellung einer 40%igen Siliconemulsion analog Beispiel 2 ohne Komponente C).

**Beispiel 11**

Durchführung des Emulsionsauftrages analog Beispiel 3 mit den Emulsionen aus Beispielen 9 und 10.

**Beispiel 12**

Bei Durchführung des Backtests in Analogie zu Beispiel 4 mit der Emulsion aus Beispiel 11 wurden 100 g Backrückstand /m$^2$ gefunden.

**Patentansprüche**

1.  Wäßrige Emulsionen, bestehend im wesentlichen aus:

    -   mindestens einem mindestens 2 ungesättigte Kohlenwasserstoffgruppen aufweisenden Organopolysiloxan A),

    -   mindestens einem Methylhydrogenpolysiloxan B),

    -   mindestens einem linearen Trimethylsiloxy gruppen-endgestopptem Polydimethylsiloxan C),

    -   mindestens einem Katalysator D) aus der Platingruppe,

    -   mindestens einem Inhibitor E),

    -   gegebenenfalls Emulgatoren und / oder Verdickern F),

    -   gegebenenfalls Zusatz - und/oder Hilfsstoffen G).

2.  Wäßrige Emulsionen nach Anspruch 1, **dadurch gekennzeichnet, daß** das mindestens 2 ungesättigte Kohlenwasserstoffgruppen aufweisende Organopolysiloxan A) ein cyclisches, lineares oder verzweigtes Polysiloxan ist, das Einheiten der allgemeinen Formel (I)

$$(R)_a(R^1)_b SiO_{(4-a-b)/2} \qquad\qquad (I)$$

    aufweist, mit

    R =  $C_2$-$C_8$-Alkenyl- und/oder ungesättigten $C_3$-$C_{10}$-Etherresten,
    R$^1$ =  einwertige, gesättigte gegebenenfalls substituierte Kohlenwasserstoffreste mit bis zu 10 Kohlenstoffatomen aus der Gruppe der substituierten und unsubstituierten Alkyl-, Aryl-, und Arylalkylreste,

    wobei a und b ganzen Zahlen in folgenden Grenzen sind: $0 \leq a \leq 3$, $0 \leq b \leq 3$ und $0 \leq a + b \leq 4$ und jedes einzelne R und R$^1$ innerhalb der Moleküls gleich oder ungleich sein kann.

3.  Wäßrige Emulsionen nach einem der Ansprüche 1 bis 2, **dadurch gekennzeichnet, daß** das mindestens 2 ungesättigte Kohlenwasserstoffgruppen aufweisende Organopolysiloxan A) verzweigt ist,

    -   in diesem das Verhältnis der Anzahl der Diorganosiloxyeinheiten (D-Einheiten) zur Anzahl der Verzweigungsstellen durchschnittlich 15 und 40 beträgt,
    -   in diesem mindestens eine Triorganosiloxyeinheit (M-Einheit) und maximal die Hälfte aller M-Einheiten von ungesättigten Resten frei sind, die restlichen M-Einheiten nur je einen ungesättigten Rest tragen, und der Gehalt an ungesättigten Resten 0,1 bis 1 mmol/g beträgt.

4.  Wäßrige Emulsionen nach einem oder mehreren der Ansprüche 1 bis 3, **dadurch gekennzeichnet, daß** das Methylhydrogenpolysiloxan B) Einheiten der allgemeinen Formel

$$H_c(R^2)_d SiO_{(4-c-d)/2} \qquad\qquad (II)$$

    enthält,

mit $R^2$ = einwertige, gesättigte gegebenenfalls substituierte Kohlenwasserstoffreste mit bis zu 10 Kohlenstoffatomen aus der Gruppe der substituierten und unsubstituierten Alkyl-, Aryl-, Arylalkyl und/oder $C_2$-$C_8$-Alkenylreste, wobei

c und d ganze Zahlen sind mit $0 \leq d \leq 3$ und $0 \leq c \leq 2$ sowie $0 \leq c + d \leq 4$.

5. Wäßrige Emulsionen nach einem oder mehreren der Ansprüche 1 bis 4, **dadurch gekennzeichnet, daß** das Methylhydrogenpolysiloxan B) linear ist.

6. Wäßrige Emulsionen nach einem oder mehreren der Ansprüche 1 bis 5, **dadurch gekennzeichnet, daß** in dem Methylhydrogenpolysiloxan B) der molare Anteil von direkt an ein Siliciumatom gebundenen Wasserstoffatomen zwischen 0,01 und 17 mmol pro Gramm des Methylhydrogenpolysiloxan B) liegt.

7. Wäßrige Emulsionen nach einem oder mehreren der Ansprüche 1 bis 6, **dadurch gekennzeichnet, daß** die Komponenten A) und B) in einem solchen Mengenverhältnis vorliegen, daß das molare Verhältnis von direkt an ein Siliciumatom gebundenen Wasserstoffatomen (SiH) in der Komponente B) zu den ungesättigten Resten (Si-Vinyl) in der Komponente A) zwischen 0,05 und 20 beträgt.

8. Wäßrige Emulsionen nach einem oder mehreren der Ansprüche 1 bis 7, **dadurch gekennzeichnet, daß** Komponente D) ein Katalysator ist, der die Elemente Platin, Rhodium, Iridium, Nickel, Ruthenium und/oder Palladium, elementar, auf einer Trägersubstanz oder in Form ihrer Verbindungen enthält.

9. Wäßrige Emulsionen nach einem oder mehreren der Ansprüche 1 bis 8, **dadurch gekennzeichnet, daß** Komponente E) 2-Methyl-3-butin-2-ol, 1-Ethinylcyclohexanol und/oder ($\pm$) 3-Phenyl-1-butin-3-ol ist.

10. Wäßrige Emulsionen nach einem oder mehreren der Ansprüche 1 bis 9, **dadurch gekennzeichnet, daß** Komponente F) $C_8$-$C_{22}$-Alkyldimethylbenzylammoniumchlorid, Natriumlaurylsulfat, Polyethylenglykolether von einwertigen aliphatischen Alkoholen $C_{12}$-$C_{20}$- und $C_2$-$C_9$-Alkylphenolen, Polyethylenglykolester natürlicher Fettsäuren $C_8$-$C_{22}$ und vegetabilischer Öle, und/oder teilacetylierter Polyvinylalkohol mit weniger als 20 % Acetylgruppen und einem K-Wert von über 40 ist.

11. Wäßrige Emulsionen nach einem oder mehreren der Ansprüche 1 bis 10, **dadurch gekennzeichnet, daß** die Zusatz- und Hilfsstoffe G)

   - Polysiloxanharze, die aus Bausteinen der allgemeinen Formeln (I) und (II) aufgebaut sind,
   - Füllstoffe, Verlaufsmittel, Polyethersiloxane, Fluortenside und/oder keimhemmende Mittel sind.

12. Wäßrige Emulsionen nach einem oder mehreren der Ansprüche 1 bis 11, **dadurch gekennzeichnet, daß** diese folgende Bestandteile aufweist:

   - als Komponente A): $T_8 D_{250} M^{Vi}_7 M_3$
   - als Methylhydrogenpolysiloxan B) $M_2 D^H_{30} D_{10}$
   - als Organopolysiloxan C): Polydimethylsiloxan der Viskosität 1 000 $mm^2/s$
   - als Katalysator D): Pt-Vinylsiloxan-Komplex
   - als Inhibitor E): Ethinylcyclohexanol
   - als Stabilisator und/oder Verdicker F): Polyvinylalkohol gebenenfalls in Kombination mit Natriumlaurylsulfat und
   - als Zusatz- und/oder Hilfsstoffe G): keimhemmende Mittel und/oder Polyethersiloxan.

13. Verfahren zur Herstellung von wäßrigen Emulsionen nach einem oder mehreren der Ansprüche 1 bis 13, **dadurch gekennzeichnet, daß** Katalysator D) sowie gegebenenfalls Organopolysiloxan A), und oder lineares Trimethylsiloxygruppen-endgestopptes Polydimethylsiloxan in Wasser emulgiert werden und separat eine Emulsion aus Organopolysiloxan A), Methylhydrogenpolysiloxan B), linearen Trimethylsiloxygruppen-endgestopptes Polydimethylsiloxan Inhibitor E), gegebenenfalls Emulgatoren und/oder Verdicker F) in Wasser hergestellt wird und anschließend beide Emulsionen zusammengerührt werden.

14. Verwendung einer Emulsionen nach einem oder mehreren der Ansprüche 1 bis 13 zur Herstellung einer abhäsiven Ausrüstung von flexiblen Substraten.

**Claims**

1.  Aqueous emulsions essentially consisting of:

    -   at least one organopolysiloxane A) containing at least two unsaturated hydrocarbon groups,

    -   at least one methyl hydrogen polysiloxane B),

    -   at least one linear trimethylsiloxy-end-terminated polydimethylsiloxne C),

    -   at least one catalyst D) from the platinum group,

    -   at least one inhibitor E),

    -   if appropriate emulsifiers and/or thickeners F),

    -   if appropriate additives and/or aids G).

2.  Aqueous emulsions according to Claim 1, **characterized in that** the organopolysiloxane A) containing at least two unsaturated hydrocarbon groups is a cyclic, linear or branched polysiloxane which contains units of the general formula (I)

$$(R)_a(R^1)_b SiO_{(4-a-b)/2} \qquad (I),$$

    where

    R = $C_2$-$C_8$-alkenyl and/or unsaturated $C_3$-$C_{10}$-ether radicals,
    $R^1$ = monovalent, saturated, substituted or unsubstituted hydrocarbon radicals having up to 10 carbon atoms selected from the group of the substituted and unsubstituted alkyl, aryl and arylalkyl radicals,

    where a and b are integers within the following limits: $0 \le a \le 3$, $0 \le b \le 3$ and $0 \le a + b \le 4$ and each individual R and $R^1$ within the molecule can be identical or different.

3.  Aqueous emulsions according to one of Claims 1 to 2, **characterized in that** the organopolysiloxane A) containing at least two unsaturated hydrocarbon groups is branched,

    -   in this the ratio of the diorganosiloxy units (D units) for the number of branch points is on average 15 and 40,
    -   in this at least one triorganosiloxy unit (M unit) and maximum of the half of all M units are free from unsaturated radicals, the remaining M units bear only one unsaturated radical each, and the content of unsaturated radicals is 0.1 to 1 mmol/g.

4.  Aqueous emulsions according to one or more of Claims 1 to 3, **characterized in that** the methyl hydrogen polysiloxane B) contains units of the general formula

$$H_c(R^2)_d SiO_{(4-c-d)/2} \qquad (II),$$

    where

    $R^2$ = monovalent, saturated, substituted or unsubstituted hydrocarbon radicals having up to 10 carbon atoms selected from the group consisting of substituted and unsubstituted alky, aryl, arylalkyl and/or $C_2$-$C_8$-alkenyl radicals, where
    c and d are integers where $0 \le d \le 3$ and $0 \le c \le 2$ and also $0 \le c + d \le 4$.

5.  Aqueous emulsions according to one or more of Claims 1 to 4, **characterized in that** the methyl hydrogen polysiloxane B is linear.

6. Aqueous emulsions according to one or more of Claims 1 to 5, **characterized in that**, in the methyl hydrogen polysiloxane B), the molar fraction of hydrogen atoms bound directly to a silicon atom is between 0.01 and 17 mmol per gram of the methyl hydrogen polysiloxane B).

7. Aqueous emulsions according to one or more of Claims 1 to 6, **characterized in that** the components A) and B) are present in a ratio such that the molar ratio of hydrogen atoms bound directly to a silicon atom (SiH) in the component B) to the unsaturated radicals (Si-vinyl) in the component A) is between 0.05 and 20.

8. Aqueous emulsions according to one or more of Claims 1 to 7, **characterized in that** component D) is a catalyst which comprises the elements platinum, rhodium, iridium, nickel, ruthenium and/or palladium, in elemental form, on a support substance, or in the form of their compounds.

9. Aqueous emulsions according to one or more of Claims 1 to 8, **characterized in that** the component E) is 2-methyl-3-butyn-2-ol, 1-ethynylcyclohexanol and/or ($\pm$) 3-phenyl-1-butyn-3-ol.

10. Aqueous emulsions according to one or more of claims 1 to 9, **characterized in that** component F) is $C_8$-$C_{22}$-alkyldimethylbenzylammonium chloride, sodium lauryl sulphate, polyethylene glycol ethers of monovalent aliphatic alcohols $C_{12}$-$C_{20}$- and $C_2$-$C_9$-alkylphenols, polyethylene glycol esters of natural fatty acids $C_8$-$C_{22}$ and vegetable oils, and/or partially acetylated poly(vinyl alcohol) containing less than 20% acetyl groups and having a K value of greater than 40.

11. Aqueous emulsions according to one or more of Claims 1 to 10, **characterized in that** the additives and aids G) are

   - polysiloxane resins which are made up of building blocks of the general formulae (I) and (II),
   - fillers, flow control agents, polyether siloxanes, fluorosurfactants and/or antimicrobial agents.

12. Aqueous emulsions according to one or more of Claims 1 to 11, **characterized in that** these have the following constituents:

   - as component A) :     $T_8D_{250}M^{Vi}_7M_3$

   - as methyl hydrogen polysiloxane B)     $M_2D^H_{30}D_{10}$

   - as organopolysiloxane C) :     Polydimethylsiloxane of viscosity 1000 mm$^2$/s

   - as catalyst D):     Pt-vinylsiloxane complex

   - as inhibitor E):     Ethynylcyclohexanol

   - as stabilizer and/or thickener F):     Poly(vinyl alcohol), if appropriate in combination with sodium lauryl sulphate and

   - as additives and/or aids G):     antimicrobial agents and/or polyether siloxane.

13. Process for producing aqueous emulsions according to one or more of Claims 1 to 13, **characterized in that** catalyst D) and also if appropriate organopolysiloxane A), and/or linear trimethyl-siloxy-end-terminated polydimethylsiloxane are emulsified in water and, separately, an emulsion of organopolysiloxane A), methyl hydrogen polysiloxane B), linear trimethylsiloxy-end-terminated polydimethylsiloxane, inhibitor E), if appropriate emulsifiers and/or thickeners F), is produced in water and then both emulsions are combined.

14. Use of an emulsion according to one or more of Claims 1 to 13 for producing an abhesive finish of flexible substrates.

**Revendications**

1. Emulsions aqueuses, constituées essentiellement de :

   - au moins un organopolysiloxane A) présentant des groupes hydrocarbonés au moins doublement insaturés,

- au moins un méthylhydrogénopolysiloxane B),
- au moins un polydiméthylsiloxane linéaire C) terminé aux extrémités par des groupes triméthylsiloxy,
- au moins un catalyseur D) du groupe du platine,
- au moins un inhibiteur E),
- éventuellement des émulsionnants et/ou des épaississants F),
- éventuellement des additifs et/ou des auxiliaires G).

**2.** Emulsions aqueuses selon la revendication 1, **caractérisées en ce que** le au moins un organopolysiloxane A) présentant des groupes hydrocarbonés au moins doublement insaturés est un polysiloxane cyclique, linéaire ou ramifié, qui présente des unités de formule générale (I)

$$(R)_a(R^1)_b SiO_{(4-a-b)/2} \tag{I}$$

dans laquelle

R = radicaux alcényle en $C_2$-$C_8$ et/ou éther insaturé en $C_3$-$C_{10}$,
$R^1$ = des radicaux hydrocarbonés monovalents, saturés, éventuellement substitués avec jusqu'à 10 atomes de carbone dans le groupe des radicaux alkyle, aryle, et arylalkyle substitués et non substitués,

dans laquelle a et b sont des nombres entiers dans les plages suivantes : $0 \leq a \leq 3$, $0 \leq b \leq 3$ et $0 \leq a+b \leq 4$ et chaque R et $R^1$ individuel peut être identique ou différente à l'intérieur de la molécule.

**3.** Emulsions aqueuses selon l'une des revendications 1 à 2, **caractérisées en ce que** le au moins un organopolysiloxane A) présentant des groupes hydrocarbonés au moins doublement insaturés est ramifié,

- dans lequel le rapport de la quantité des unités diorganosiloxy unités D) au nombre de positions de ramification s'élève en moyenne à 15 et 40,
- dans lequel au moins une unité triorganosiloxane (unité M) et au maximum la moitié de toutes les unités M sont exemptes de radicaux insaturés, les unités M restantes portant seulement chacune un radical insaturé, et la quantité des radicaux insaturés s'élève de 0,1 à 1 mmole/g.

**4.** Emulsions aqueuses selon l'une ou plusieurs des revendications 1 à 3, **caractérisées en ce que** l'unité méthylhydrogénopolysiloxane B) contient des unités de formule générale

$$H_c(R^2)_d SiO_{(4-c-d)/2} \tag{II}$$

avec $R^2$ = des radicaux hydrocarbonés ramifiés, saturés éventuellement substitués avec jusqu'à 10 atomes de carbone du groupe des radicaux alkyle, aryle, arylalkyle et/ou alcényle en $C_2$-$C_8$, substitués et non substitués, dans laquelle c et d sont des nombres entiers avec $0 \leq d \leq 3$ et $0 \leq c \leq 2$ ainsi que $0 \leq c+d \leq 4$.

**5.** Emulsions aqueuses selon l'une ou plusieurs des revendications 1 à 5, **caractérisées en ce que** le méthylhydrogénopolysiloxane B) est linéaire.

**6.** Emulsions aqueuses selon l'une ou plusieurs des revendications 1 à 5, **caractérisées en ce que** dans le méthylhydrogénopolysiloxane B) la quantité molaire des atomes d'hydrogène liés directement sur l'atome de silicium est entre 0,01 et 17 mmoles par gramme de méthylhydrogénopolysiloxane B).

**7.** Emulsions aqueuses selon l'une ou plusieurs des revendications 1 à 6, **caractérisées en ce que** les composants A) et B) sont dans un rapport en quantités tel que le rapport molaire des atomes d'hydrogène liés directement sur un atome de silicium (SiH) dans le composant B) aux radicaux insaturés (Si-vinyle) dans le composant A) s'élève entre 0,05 et 20.

**8.** Emulsions aqueuses selon l'une ou plusieurs des revendications 1 à 7, **caractérisées en ce que** le composant D) est un catalyseur qui contient les éléments platine, rhodium, iridium, nickel, ruthénium et/ou palladium, de manière élémentaire, sur une substance support ou sous forme de ses composés.

9. Emulsions aqueuses selon l'une ou plusieurs des revendications 1 à 8, **caractérisées en ce que** le composant E) est le 2-méthyl-3-butin-2-ol, le 1-éthinylcyclohexanol et/ou le (±) 3-phényl-1-butin-3-ol.

10. Emulsions aqueuses selon l'une ou plusieurs des revendications 1 à 9, **caractérisées en ce que** le composant F) est le chlorure d'alkyl(en $C_8$-$C_{22}$)diméthylbenzylammonium, le laurylsulfate de sodium, l'éther de polyéthylèneglycol d'alcools aliphatiques monovalents et d'alkyl(en $C_{12}$-$C_{20}$ et $C_2$-$C_9$)phénols, l'ester de polyéthylèneglycol d'acides gras naturels en $C_8$-$C_{22}$ et d'huile végétale et/ou l'alcool polyvinylique en partie acétylé avec moins de 20 % de groupes acétyle et une valeur de K supérieure à 40.

11. Emulsions aqueuses selon l'une ou plusieurs des revendications 1 à 10, **caractérisées en ce que** les additifs et/ou les auxiliaires G) sont

   - des résines polysiloxanes, qui sont formées à partir de motifs de formules générales (I) et (II),
   - des charges, des agents d'étalement, des polyéthersiloxanes, des tensioactifs fluorés et/ou des agents inhibiteurs de germes.

12. Emulsions aqueuses selon l'une ou plusieurs des revendications 1 à 11, **caractérisées en ce qu'**elles présentent des motifs suivants :

   - comme composant A) :      $T_8 D_{250} M^{Vi}_7 M_3$
   - comme méthylhydrogénopolysiloxane B) :      $M_2 D^H_{30} D_{10}$
   - comme organopolysiloxane C) :      un polydiméthylsiloxane de viscosité 1000 m²/s
   - comme catalyseur D) :      un complexe de Pt-vinylsiloxane
   - comme inhibiteur E) :      l'éthinylcyclohexanol
   - comme stabilisant et/ou épaississant F :      l'alcool polyvinylique éventuellement en combinaison avec le laurylsulfate de sodium et
   - comme additif et/ou des auxiliaire G) :      un agent inhibiteur de germe et/ou un polyéthersiloxane.

13. Procédé de préparation d'émulsions aqueuses selon l'une ou plusieurs des revendications 1 à 12, **caractérisé en ce qu'**on émulsifie dans l'eau le catalyseur D ainsi qu'éventuellement l'organopolysiloxane A), et/ou le polydiméthylsiloxane linéaire terminé aux extrémités par des groupes triméthylsiloxy et on prépare séparément une émulsion dans l'eau à partir de l'organopolysiloxane A), le méthylhydrogénopolysiloxane B), le polydiméthylsiloxane linéaire terminé aux extrémités par des groupes triméthylsiloxy, l'inhibiteur E), éventuellement les émulsionnants et/ou les épaississants F) et ensuite on agite ensemble les deux émulsions.

14. Utilisation d'une émulsion selon l'une ou plusieurs des revendications 1 à 13 pour la préparation d'un apprêt adhésif pour des substrats flexibles.